# EUROPEAN PATENT SPECIFICATION

(11) **EP 1 053 679 B1**
(45) Date of publication and mention of the grant of the patent: **19.04.2006**
(21) Application number: 00109426.7
(22) Date of filing: 03.05.2000
(51) Int. Cl.: A01N 43/40, A01N 47/36, A01N 43/653, A01N 37/32

(54) **Herbicidal compositions**
Herbizide Zusammensetzungen
Compositions herbicides

(30) Priority: 05.05.1999 GB 9910388; 05.05.1999 GB 9910400; 05.05.1999 GB 9910406
(43) Date of publication of application: 22.11.2000
(73) Proprietor: Bayer CropScience S.A., 69009 Lyon (FR)
(72) Inventor: Fleury, Philippe, 69003 Lyon (FR); Gamblin, Alan, Aventis Agriculture Ltd. Res. St., Ongar Essex CM5 OHW (GB); Loubiere, Pierre, 01390 Mionnay (FR); Millet, Jean-Claude, 69130 Ecully (FR)
(74) Representative: Rippel, Hans Christoph

(56) References cited:
- EP-A- 0 502 740
- EP-A- 0 863 142
- WO-A-95/32621
- DE-A- 19 834 627
- DE-A- 19 834 629
- DE-A- 19 851 854

## Description

The present invention relates to a method of controlling the growth of weeds by the application of a mixture of N-(2,4-difluorophenyl)-2-[3-(trifluoromethyl)phenoxy]-3-pyridinecarboxamide, i.e. diflufenican; and flupyrsulfuron methyl and to compositions containing them.

Diflufenican is a well known selective herbicide disclosed in European Patent No. 53011 and Australian Patent No. 557053 and The Pesticide Manual page 397-398, 11th edition (British Crop Protection Council), recommended for the control of grass and broad-leaved weed species in autumn sown wheat and barley, applied pre- or early post-emergence.

However the use of diflufenican is made difficult for several reasons:
1. The weed spectrum is incomplete, often with poor control of grass weeds and weak activity on certain broadleaf weed species especially Matricaria species, Stellaria media, Viola species and Galium aparine.
2. Whilst the pre-emergence weed control is generally satisfactory, post-emergence weed control frequently gives less than the desired results.
3. The weed control symptoms of diflufenican are rather slow to appear and some farmers prefer to see a more rapid onset of symptoms. Whilst weeds are present they are in competition with the crop for light, and for soil moisture and nutrients.
4. At elevated dose rates especially when applied late in the season (February onwards in the northern hemisphere, and July-August onwards in the southern hemisphere), a problem of phytotoxicity to the following crop may occur. This phytotoxic effect is due to a sufficient quantity of diflufenican persisting in the soil.
5. When applied late in the season (February onwards in the northern hemisphere, and July-August onwards in the southern hemisphere; or after the four leaf weed stage), diflufenican gives a slower and weaker level of weed control as compared to earlier timings.

For these reasons it is very difficult to use diflufenican to secure efficient weed control and in particular to control the main weed species with good pre- and post-emergence weed control, rapid onset of visible symptoms on the treated weeds and no substantial phytotoxicity to the following crop.

DE 19834629 discloses ternary herbicidal compositions containing diflufenican and flupyrsulfuron methyl with further herbicides. EP 0 502 740 discloses herbicidal compounds e.g. flupyrsulfuron methyl and gives a list of herbicides which may be advantageously added thereto, but does not suggest any synergium.

Flupyrsulfuron methyl (1-(4,6-dimethoxypyrimidin-2-yl)-3-(3-methoxycarbonyl-6-trifluoromethyl-2-pyridylsulphonyl)urea) and agriculturally acceptable salts thereof such as the sodium salt were disclosed in US Patent publication number 5393734.

An object of the present invention is to provide a herbicide which is useful in cereal cropping.

A further object of this invention is to provide a herbicide which gives good control of important broadleaf weed species including Matricaria species, Stellaria media, Viola species and Galium aparine.

A further object of this invention is to provide a herbicide which gives good control of the grass weed Alopecurus myosuroides.

A further object of this invention is to provide a herbicidally effective mixture which provides improved post-emergence weed control.

A further object of this invention is to provide a herbicide with a more rapid onset of action than diflufenican alone.

A further object of this invention is to provide a herbicide which exhibits reduced phytotoxic effects on following crops.

A further object of this invention is to provide a herbicidally effective mixture which allows diflufenican to be used in reduced dose rates whilst retaining both crop selectivity and herbicidal efficacy.

A further object of this invention is to extend the spectrum of herbicidal activity without loss of crop selectivity for diflufenican; in combination with flupyrsulfuron methyl. Flupyrsulfuron methyl is particularly useful for early spring application and the mixture with diflufenican allows it to be used in autumn as well. A further advantage of the mixture is therefore the extended period during which it may be applied and give a good weed control.

A further object of this invention is to provide a mixture which possesses improved weed control over that of diflufenican alone. It is known that flupyrsulfuron methyl exerts its herbicidal activity by preventing the natural growth of the plant. Its mode of action would be expected to prevent uptake of diflufenican by the plant. This in turn would be expected to lead to mutual antagonism in mixtures of diflufenican and flupyrsulfuron methyl. Investigation of the actual activity of such mixtures has revealed, contrary to what would be expected, additive and/or synergistic weed control by the mixture.

It has been found that these objects can be met in whole or in part by the combinations or mixtures of the invention.

### Description of the Invention

The present invention accordingly provides a method of controlling the growth of weeds at a locus which comprises applying to said locus a herbicidally effective amount of:
(a) diflufenican, which is N-(2,4-difluorophenyl)-2-[3-(trifluoromethyl)phenoxy]-3-pyridinecarboxamide; and
(b) flupyrsulfuron methyl, which is 1-(4,6-dimethoxypyrimidin-2-yl)-3-(3-methoxycarbonyl-6-trifluoromethyl-2-pyridylsulphonyl)urea, or an agriculturally acceptable salt thereof.

For this purpose, the above component herbicides (a) and (b) are normally used in the form of herbicidal compositions (i.e. in association with compatible diluents or carriers and/or surface-active agents suitable for use in herbicidal compositions), for example as hereinafter described.

The amounts of the herbicides (a) and (b) applied vary with the nature of the weeds, the compositions used, the time of application, the climatic and edaphic conditions and (when used to control the growth of weeds in crop-growing areas) the nature of the crops. When applied to a crop-growing area, the rate of application should be sufficient to control the growth of weeds without causing substantial permanent damage to the crop.

In general, taking these factors into account, application rates from about 5 g to about 300 g of diflufenican and from about 1 g to about 20 g flupyrsulfuron methyl herbicide per hectaregive good results. However, it is to be understood that higher or lower application rates may be used, depending upon the particular problem of weed control encountered.

The herbicides (a) and (b) in combination may be used to control selectively the growth of weeds, for example to control the growth of those species hereinafter mentioned, by pre- or preferably post-emergence application in a directional or non-directional fashion, e.g. by directional or non-directional spraying, to a locus of weed infestation which is an area used, or to be used, for growing crops, for example wheat, barley, oats, rye, maize and rice, soya beans, field and dwarf beans, peas, lucerne, cotton, peanuts, flax, onions, carrots, oilseed rape, sunflower, sugarcane, potatoes and permanent or sown grassland before or after sowing of the crop or before or after emergence of the crop. For the selective control of weeds at a locus of weed infestation which is an area used, or to be used, for the growing of crops application rates from about 10 g to about 200 g of diflufenican and from about 1 g to about 15 g of flupyrsulfuron methyl per hectare are particularly suitable, more preferably from about 25 g to about 125 g of diflufenican and from about 3 g to about 15 g of flupyrsulfuron methyl per hectare.

The use of (a) and (b) for the control of weeds in winter or spring cereals is especially preferred.

Where the diflufenican and flupyrsulfuron methyl mixture is for use in spring or winter cereals, application rates of from about 10 g to about 250 g per hectare of diflufenican and from about 1 g to about 15 g per hectare of flupyrsulfuron methyl are preferred, more preferably from about 15 g to about 200 g of diflufenican and from about 3 g to about 15g of flupyrsulfuron methyl per hectare, even more preferably from about 25 g to about 125 g of diflufenican and from about 5 g to about 15 g of flupyrsulfuron methyl per hectare.

The method described above may be used to control a very wide spectrum of annual broad-leafed weeds and grass weeds, for example the weeds which may be controlled include:
broad-leafed weeds, for example, Abutilon theophrasti, Amaranthus hybridus, Amaranthus retroflexus, Amaranthus rudis, Amaranthus tuberculatos, Ambrosia artemisiifolia, Ambrosia trifida, Anthemis arvensis, Bidens pilosa, Chenopodium album, Convolvulus arvensis, Datura ferox, Datura stramonium, Euphorbia spp, Fumaria officinalis, Galium aparine, Helianthus spp, Ipomoea spp. e.g. Ipomoea purpurea, Lamium spp such as Lamium amplexicaule, Matricaria spp such as Matricaria chamomilla, Papaver rhoeas, Plantago spp, Polygonum aviculare, Polygonum convolvulus, Polygonum pennsylvanicum, Raphanus raphanistrum, Schkuhria pinnata, Sesbania exaltata, Sida rhombifolia, Sida spinosa, Sinapis arvensis, Solanum nigrum, Stellaria media, Thlaspi arvense, Tripleurospermum maritima, Veronica hederifolia, Veronica persica, Viola arvensis and Xanthium strumarium; and
grass weeds, for example Alopecurus myosuroides, Apera spica-venti, Avena fatua, Brachiaria plantaginea, Cenchrus echinatus, Cynodon dactylon, Digitaria horizontalis, Digitaria sanguinalis, Echinochloa crus-galli, Eragrostis virescens, Sorghum bicolor, Eleusine indica, Imperata cylindrica, Panicum dichotomiflorum, Panicum maximum, Panicum miliaceum, Pennisetum glaucum, Poa annua, Setaria spp, e.g. Setaria faberii, Setaria viridis, Setaria lutescens and Setaria italica, Sorghum halepense; and sedges, for example, Cyperus esculentus.

The mixtures of the present invention may also be used to control the growth of weeds at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. Where the diflufenican and flupyrsulfuron methyl mixture is used, application rates of from about 30 g to about 300 g per hectare of diflufenican and from about 3 g to about 20 g per hectare of flupyrsulfuron methyl are generally used, more preferably from about 60 g to about 250 g of diflufenican and from about 5 g to about 20 g of flupyrsulfuron methyl per hectare.

The following non-limiting examples illustrate the method of the invention. Unless otherwise specified, in the examples the application rates for (a) and (b) refer to the amount of active ingredient present. In the description that follows the following codes are used for the various weed species:
Alopecurus myosuroides (ALOMY), Galium aparine (GALAP), Lamium purpureum (LAMPU), Matricaria spp (MATSS), Matricaria chamomilla (MATCH), Papaver rhoeas (PAPRH), Stellaria media (STEME), Tripleurospermum maritima (MATIN), Veronica hederifolia (VERHE), Veronica persica (VERPE) and Viola arvensis (VIOAR).

### Example 1

Field trials were carried out early post-emergence (from the 3 leaf stage to the first tiller of the crop) in wheat and barley at a research farm. A tank mixture comprising diflufenican (25g/ha) and flupyrsulfuron methyl (5g/ha) was sprayed on a plot comprising the weed population.

Table 1 below shows the observed percentage control of the weed species by each compound and by the combination at 120 days after treatment.

**Table 1**

| Weed | % Weed Control | | |
|---|---|---|---|
| | Diflufenican (25g/ha) | Flupyrsulfuron methyl (5g/ha) | Diflufenican (25g/ha)+ Flupyrsulfuron methyl (5g/ha) |
| PAPRH | 49 | 70 | 93 |
| VERPE | 72 | 36 | 89 |
| VIOAR | 76 | 42 | 96 |
| MATCH | 25 | 91 | 98 |
| STEME | 63 | 65 | 80 |

Good results were also obtained on other weed species.

The wheat and barley crop was not damaged at 120 days after treatment.

The result shows good control of important broadleaf weed species by early post-emergence application.

No antagonism occurred, the results were additive or synergistic.

### Example 2

Field trials were carried out according to Example 1 using a tank mixture comprising diflufenican (50g/ha) and flupyrsulfuron methyl (10g/ha) was sprayed on a plot comprising the weed population.

Table 2 below shows the observed percentage control of the weed species by each compound and by the combination at 99 days after treatment.

**Table 2**

| Dose g/ha | | % Weed control | | |
|---|---|---|---|---|
| Diflufenican | Flupyrsulfuron methyl | ALOMY | VERPE | VERHE |
| 50 | 0 | 14 | 45 | 40 |
| 0 | 10 | 65 | 30 | 30 |
| 50 | 10 | 83 | 100 | 80 |

The result shows good control of the grass weed species Alopecurus myosuroides by early post-emergence application.

Good results were also obtained on other weed species.

The wheat and barley crop was not damaged at 99 days after treatment.

### Example 3

A field trial was performed according to Example 1 but using a mixture of diflufenican (50g/ha) and flupyrsulfuron methyl (15g/ha). Table 3 shows the results obtained at 120 days after treatment, and illustrates that flupyrsulfuron methyl improves the control of the weed species Stellaria media, Matricaria species, Galium aparine, Papaver rhoeas and Veronica hederifolia compared to diflufenican alone.

**Table 3**

| Weed | % Weed Control | | |
|---|---|---|---|
| | Diflufenican (50g/ha) | Flupyrsulfuron methyl (15g/ha) | Diflufenican (50g/ha) + Flupyrsulfuron methyl (15g/ha) |
| MATCH | 43 | 96 | 100 |
| PAPRH | 89 | 80 | 100 |
| STEME | 74 | 76 | 88 |
| VERHE | 71 | 41 | 78 |
| GALAP | 51 | 47 | 58 |
| VERPE | 82 | 20 | 90 |

Good results were also obtained on other weed species.

The wheat and barley crop was not damaged at 120 days after treatment.

No antagonism occurred, the results were additive or synergistic.

### Example 4

A field trial was performed according to Example 1 but using a mixture of diflufenican (125g/ha) and flupyrsulfuron methyl (10g/ha). Table 4 shows the results obtained at 47 days after treatment, and illustrates the improved control by the mixture of the weed species Galium aparine, Tripleurospermum maritima, Veronica persica and Viola arvensis compared diflufenican and flupyrsulfuron methyl alone.

**Table 4**

| Weed | % Weed Control | | |
|---|---|---|---|
| | Diflufenican (125g/ha) | Flupyrsulfuron methyl (10g/ha) | Diflufenican (125g/ha) + Flupyrsulfuron methyl (10g/ha) |
| GALAP | 28 | 0 | 73 |
| MATIN | 15 | 35 | 83 |
| VERPE | 35 | 0 | 93 |
| VIOAR | 68 | 0 | 95 |

Good results were also obtained on other weed species.

The wheat and barley crop was not damaged at 47 days after treatment.

No antagonism occurred, the results were additive or synergistic.

According to a further feature of the present invention, there are provided herbicidal compositions comprising:
(a) diflufenican; and
(b) flupyrsulfuron methyl, or an agriculturally acceptable salt thereof in association with, and preferably homogeneously dispersed in, one or more compatible herbicidally- acceptable diluents or carriers and/or surface-active agents (i.e. diluents or carriers or surface-active agents of the type generally acceptable in the art as being suitable for use in herbicidal compositions and which are compatible with (a) and (b)). The term "homogeneously dispersed" is used to include compositions in which (a) and (b) are dissolved in the other components. The term "herbicidal composition" is used in a broad sense to include not only compositions which are ready for use as herbicides but also concentrates which must be diluted before use. The compositions comprising diflufenican and flupyrsulfuron methyl generally have proportions of from 1:4 to 300:1, preferably from 1:1.5 to 200:1, more preferably from 1:1 to 66.7:1, even more preferably from 1.67:1 to 25:1 wt/wt of (a):(b).
   Preferably, the compositions contain from 0.05 to 90% by weight of (a) and (b).
   The herbicidal composition may contain solid and liquid carriers and surface-active agents (e.g. wetters, dispersants or emulsifiers alone or in combination). Surface-active agents that may be present in the herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, absorbent carbon black and clays such as kaolin and bentonite. Examples of suitable liquid diluents include water, acetophenone, cyclohexanone, isophorone, toluene, xylene, and mineral, animal, and vegetable oils (these diluents may be used alone or in combination).
   Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.
   Granular formulations may be prepared by absorbing the compounds of the present invention (dissolved in suitable solvents, which may, if desired, be volatile) onto the solid diluents or carriers in granular form and, if desired, evaporating the solvents, or by granulating compositions in powder form obtained as described above.
   Powders, dispersible granules and liquid compositions in the form of concentrates may be diluted with water or other suitable diluents, for example mineral or vegetable oils, particularly in the case of liquid concentrates in which the diluent or carrier is an oil, to give compositions ready for use.
   The wettable powders (or powders for spraying) usually contain from 20 to 95% of combination, and they usually contain, in addition to the solid vehicle, from 0 to 5% of a wetting agent, from 3 to 10% of a dispersant agent and if necessary, from 0 to 10% of one or more stabilisers and/or other additives such as penetrating agents, adhesives or anti-caking agents and colourings.
   The aqueous suspension concentrates, which are applicable by spraying, are prepared in such a way as to obtain a stable fluid product (by fine grinding) which does not settle out and they usually contain from 10 to 75% of combination, from 0.5 to 15% of surface acting agents, from 0.1 to 10% of thixotropic agents, from 0 to 10% of suitable additives such as antifoams, corrosion inhibitors, stabilisers, and water or an organic liquid in which the active substance is sparingly soluble or insoluble. Some organic solid substances or inorganic salts can be dissolved in order to assist in preventing sedimentation or as antifreeze for the water.
   Preferred herbicidal compositions according to the present invention are water dispersible granules.
   The herbicidal compositions according to the present invention may also comprise (a) and (b) in association with, and preferably homogeneously dispersed in, one or more other pesticidally active compounds and, if desired one or more compatible pesticidally acceptable diluents and carriers. Examples of other pesticidally active ingredients include fungicides, insecticides, plant growth regulators.
   The following example C1 is a representative composition suitable for use in the method of the invention. In the description that follows the following are trade marks: REAX, Sellogen, Barden, Aerosil.

### Example C1

The following composition was prepared as a wettable dispersible granule (the percentages that follow are by weight):

| | |
|---|---|
| flupyrsulfuron methyl: | 75.0 % |
| REAX 88A (Surfactant): | 10.0% |
| Sellogen HR (Surfactant): | 3.0 % |
| Barden AG-1 (Clay): | 11.0% |
| Aerosil R972 (Silica filler) | 1.0 % |

The above were used in tank mixtures with diflufenican.

In accordance with the usual practice (and a preferred method according to the present invention) a tank mix may be prepared prior to use by combining separate formulations of the individual herbicidal components.

According to a further feature of the present invention, there is provided a product comprising:
(a) diflufenican; and
(b) flupyrsulfuron methyl, or an agriculturally acceptable salt thereofas a combined preparation for simultaneous, separate or sequential use, for example, in controlling the growth of weeds at a locus, e.g. crop locus.

## Claims

1. A herbicidal composition comprising as sole herbicidally active ingredients
(a) diflufenican, which is N-(2,4-difluorophenyl)-2-[3-(trifluoromethyl) phenoxy]-3-pyridinecarboxamide; and
(b) flupyrsulfuron methyl, which is 1-(4,6-dimethoxypyrimidin-2-yl)-3-(3-methoxycarbonyl-6-trifluoromethyl-2-pyridylsulphonyl)urea, or an agriculturally acceptable salt thereof
in association with a herbicidally acceptable diluent or carrier and/or surface active agent.

2. A composition according to claim 1 in which the weight ratio of (a) : (b) is from 1:4 to 300:1.

3. A composition according to claim 2 in which the weight ratio of (a) : (b) is from 1:1.5 to 200:1.

4. A method for controlling the growth of weeds at a locus which comprises applying to said locus:
(a) diflufenican; and
(b) flupyrsulfuron methyl, or an agriculturally acceptable salt thereof

5. A method according to claim 4 using from 10 g/ha to 200 g/ha of diflufenican and from 1 g/ha to 15 g/ha of flupyrsulfuron methyl.

6. A method according to claim 4 or 5 using from 25 g/ha to 125 g/ha of diflufenican and from 5 g/ha to 15 g/ha of flupyrsulfuron methyl.

7. A method according to any one of claims 4 to 6 which is used for the control of weeds in winter or spring cereals.

8. A method according to any one of claims 4 to 7 in which (a) and (b) are applied early post-emergence.

9. A product comprising as sole herbicidally active ingredients:-
(a) diflufenican; and
(b) flupyrsulfuron methyl, or an agriculturally acceptable salt thereof as a combined preparation for simultaneous, separate or sequential use in controlling the growth of weeds at a locus.

## Patentansprüche

1. Herbizide Zusammensetzung, umfassend als einzige herbizid wirksame Bestandteile
(a) Diflufenican, das ist N-(2,4-Difluorphenyl)-2-[3-(trifluormethyl)phenoxy]-3-pyridincarboxamid; und
(b) Flupyrsulfuron-methyl, das ist 1-(4,6-Dimethoxypyrimidin-2-yl)-3-(3-methoxycarbonyl-6-trifluormethyl-2-pyridylsulfonyl)harnstoff, oder ein landwirtschaftlich annehmbares Salz davon,
in Verbindung mit einem herbizid annehmbaren Verdünnungsmittel oder Träger und/oder grenzflächenaktivem Mittel.

2. Zusammensetzung nach Anspruch 1, worin das Gewichtsverhältnis von (a):(b) von 1:4 bis 300:1 beträgt.

3. Zusammensetzung nach Anspruch 2, worin das Gewichtsverhältnis von (a):(b) von 1:1,5 bis 200:1 beträgt.

4. Verfahren zur Bekämpfung des Wachstums von Unkräutern an einem Ort, das ein Aufbringen von:
(a) Diflufenican; und
(b) Flupyrsulfuron-methyl oder einem landwirtschaftlich annehmbaren Salz davon
auf diesen Ort umfaßt.

5. Verfahren nach Anspruch 4, wobei von 10 g/ha bis 200 g/ha Diflufenican und von 1 g/ha bis 15 g/ha Flupyrsulfuron-methyl angewendet werden.

6. Verfahren nach Anspruch 4 oder 5, wobei von 25 g/ha bis 125 g/ha Diflufenican und von 5 g/ha bis 15 g/ha Flupyrsulfuron-methyl angewendet werden.

7. Verfahren nach einem der Ansprüche 4 bis 6, das zur Bekämpfung von Unkräutern in Winter- oder Frühlingsgetreide angewendet wird.

8. Verfahren nach einem der Ansprüche 4 bis 7, worin (a) und (b) im frühen Nachauflaufstadium aufgebracht werden.

9. Produkt, umfassend als einzige herbizid wirksame Bestandteile:
(a) Diflufenican; und
(b) Flupyrsulfuron-methyl oder ein landwirtschaftlich annehmbares Salz davon als eine kombinierte Zubereitung für die gleichzeitige, getrennte oder aufeinanderfolgende Anwendung in der Bekämpfung des Wachstums von Unkräutern an einem Ort.

## Revendications

1. Composition herbicide comprenant en tant que seuls ingrédients à activité herbicide
(a) le diflufenicam, qui est le N- (2, 4-difluorophényl)-2-[3-(trifluorométhyl)phénoxy]-3-pyridine-carboxamide ; et
(b) le flupyrsulfuron méthyl, qui est la 1-(4,6-diméthoxypyrimidin-2-yl)-3-(3-méthoxycarbonyl-6-trifluorométhyl-2-pyridylsulfonyl)urée, ou un de leurs sels acceptable en agriculture,
en association avec un diluant ou véhicule et/ou agent de surface acceptables du point de vue herbicide.

2. Composition selon la revendication 1 dans laquelle le rapport en poids de (a):(b) va de 1:4 à 300:1.

3. Composition selon la revendication 2 dans laquelle le rapport en poids de (a):(b) va de 1:1,5 à 200:1.

4. Procédé pour le contrôle de la croissance de mauvaises herbes sur un site comprenant l'application audit site de :
(a) diflufenican ; et
(b) flupyrsulfuron methyl, ou d'un de leur sel acceptable en agriculture.

5. Procédé selon la revendication 4 utilisant de 10 g/ha à 200 g/ha de diflufenicam et de 1 g/ha à 15 g/ha de flupyrsulfuron methyl.

6. Procédé selon la revendication 4 ou 5 utilisant de 25 g/ha à 125 g/ha de diflufenicam et de 5 g/ha à 15 g/ha de flupyrsulfuron methyl.

7. Procédé selon l'une quelconque des revendications 4 à 6, qui est utilisé pour le contrôle de mauvaises herbes dans les cultures de céréales d'hiver ou de printemps.

8. Procédé selon l'une quelconque des revendications 4 à 7 dans lequel (a) et (b) sont appliqués en post-levée précoce.

9. Produit comprenant en tant que seuls ingrédients à activité herbicide :
(a) le diflufenican ; et
(b) le flupyrsulfuron méthyl, ou un de leur sel acceptable en agriculture,
en tant qu'une préparation combinée pour l'utilisation simultanée, séparée ou successive dans le contrôle de la croissance de mauvaises herbes sur un site.
